# EUROPÄISCHE PATENTSCHRIFT

(11) **EP 0 872 503 B1**
(45) Veröffentlichungstag und Bekanntmachung des Hinweises auf die Patenterteilung: **04.09.2002**
(21) Anmeldenummer: 98104641.0
(22) Anmeldetag: 14.03.1998
(51) Int. Cl.: C08G 18/80, D06M 15/564

(54) **Umsetzungsprodukte von Isocyanaten mit Hydroxyverbindungen für die Textilveredlung**
Reaction products of isocyanates with hydroxy compounds for textile finishing
Produits de réaction d'isocyanates avec des composés hydroxyles pour l'apprêt textile

(30) Priorität: 14.04.1997 DE 19715416
(43) Veröffentlichungstag der Anmeldung: 21.10.1998
(73) Patentinhaber: Ciba Spezialitätenchemie Pfersee GmbH, 86462 Langweid a.L. (DE)
(72) Erfinder: Dirschl, Franz, Dr., 86153 Augsburg (DE); Mosch, Franz, 86420 Diedorf (DE); Angele, Theodor, 86637 Wertingen (DE); Artner, Wilhelm, 86568 Motzenhofen (DE); Schidek, Edeltraud, 86199 Augsburg (DE); Rössler, Erich, 86391 Stadtbergen-Leitershofen (DE)

(56) Entgegenhaltungen:
- US-A- 4 531 946
- US-A- 4 540 765
- US-A- 4 831 098
- US-A- 4 834 764
- US-A- 5 508 370

## Beschreibung

Die Erfindung betrifft Produkte, welche blockierte Isocyanatgruppen enthalten, erhältlich durch Umsetzung von Isocyanatgruppen enthaltenden Produkten mit Hydroxyverbindungen und anschließender Blockierung, sowie deren Verwendung zur Behandlung von Fasermaterialien.

Blockierte Isocyanate, hergestellt durch die Umsetzung von mehrwertigen Isocyanaten mit Polyhydroxyverbindungen und anschließender Blockierung der noch freien NCO-Gruppen mit Blockierungsmitteln, sind bekannt. Diese sind beispielsweise in der EP-A 196 309, der EP-A 262 069 sowie der WO 92/00358 beschrieben. Blockierte Isocyanate, hergestellt durch Umsetzung von mehrwertigen Isocyanaten mit Stickstoff enthaltenden Polyhydroxyverbindungen und anschließender Blockierung, sind auch bekannt und in der EP-A 196 309 beschrieben. Auch die Umsetzung von mehrwertigen Isocyanaten mit Polyolen und mit Stickstoff enthaltenden Hydroxyverbindungen ist bekannt und beispielsweise in der EP-A 262 069 sowie der EP-A 537 578 beschrieben. Es ist auch bekannt, bei der öl- und wasserabweisenden Ausrüstung von Fasermaterialien Extender in Kombination mit Perfluoralkylreste enthaltenden Polymeren einzusetzen, also Stoffe, die die Effekte verstärken. Die Verwendung von blockierten Isocyanaten bzw. von blockierten niedermolekularen Polyurethanen als Extender ist auch bekannt und beispielsweise in der EP-A 196 309 sowie der EP-A 537 578 beschrieben.

Die in dem Stand der Technik bekannten blockierten Isocyanate weisen aber neben Vorteilen auch Nachteile auf. So sind diese beispielsweise für die Erzielung eines gewünschten Effektniveaus auf Fasermaterialien aus bestimmten Fasern oder bestimmten Fasermischungen wenig geeignet. Auch die Permanenz der mit den bekannten blockierten Isocyanaten erzielten Effekte nach Wasch- und Chemischreinigungsprozessen sowie die Scheuerfestigkeit der ausgerüsteten Fasermaterialien ist nicht optimal.

Aufgabe der vorliegenden Erfindung war es, Zusammensetzungen auf der Basis von blockierten Isocyanaten zur Verfügung zu stellen, welche für einen vielfältigen Einsatz, vorzugsweise als Extender zusammen mit Perfluoralkylgruppen enthaltenden Polymeren, auf Fasermaterialien geeignet sind, u. zw. sowohl auf Materialien aus verschiedenen Faserarten als auch zur Erzielung unterschiedlicher Effekte.

Die Aufgabe wurde gelöst durch eine Zusammensetzung, erhältlich durch folgende Verfahrensschritte:
a) Umsetzung eines Diisocyanats oder eines Gemischs von Diisocyanaten (Komponente I) mit einem oder mehreren Alkoholen mit 2 bis 8 C-Atomen und/oder mit einem oder mehreren Mono- und/oder Diethem solcher Alkohole (Komponente II), wobei diese Alkohole bzw. deren Ether mindestens zwei alkoholische Hydroxylgruppen und nicht mehr als zwei C-O-C-Bindungen aufweisen und wobei die Umsetzung so durchgeführt wird, daß das entstehende Produkt noch freie Isocyanatgruppen aufweist,
b) Umsetzung des bei Schritt a) erhaltenen Produkts mit einem organischen Amin, das zwei oder mehr alkoholische Hydroxylgruppen enthält oder einem Gemisch solcher Amine, wobei die Umsetzung so durchgeführt wird, daß das entstehende Produkt noch freie Isocyanatgruppen aufweist, mit der Maßgabe, daß mindestens ein Alkohol, ein Ether oder ein Amin von den in Schritt a) bzw. b) eingesetzten Alkoholen, Ethern und Aminen drei oder mehr alkoholische Hydroxylgruppen enthält,
c) Blockierung der freien Isocyanatgruppen des bei Schritt b) erhaltenen Produkts durch Umsetzung mit einem Blockierungsmittel,
d) ggf. Dispergierung des nach Schritt c) erhaltenen Produkts in Wasser und Einstellung des pH-Werts.

Die erfindungsgemäßen Zusammensetzungen haben folgende Vorteile :
1. Sie können auf verschiedenartigen Fasermaterialien eingesetzt werden.
2. Sie sind zur Erzielung von unterschiedlichen Ausrüstungseffekten geeignet.
3. Die ausgerüsteten Fasermaterialien weisen eine sehr gute Permanenz von Effekten nach Wasch- und Chemisch-Reinigungsprozessen auf.

Die zur Herstellung der erfindungsgemäßen Zusammensetzungen in Schritt a) eingesetzten Diisocyanate sind bekannt und beispielsweise, ohne Anspruch auf Vollständigkeit, in der EP-A 537 578 beschrieben. Bevorzugt sind aromatische Diisocyanate. Besonders gut geeignet sind Diphenylmethandiisocyanate der allgemeinen Formel (III), 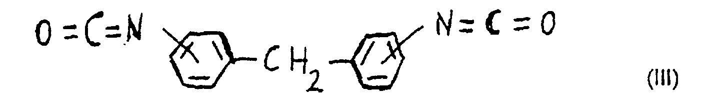 insbesondere Diphenylmethan-4,4'-diisocyanat, oder Toluylendiisocyanate der allgemeinen Formel (IV) 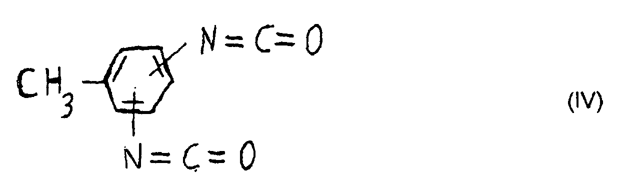 wobei sowohl einzelne Isomere als auch Gemische von isomeren Diphenylmethan- oder Toluylendiisocyanaten eingesetzt werden können.

Zur Umsetzung mit den Diisocyanaten gemäß Schritt a) werden Alkohole mit 2 bis 8 C-Atomen oder Mono- oder Diether solcher Alkohole oder Gemische aus diesen Alkoholen und deren Mono- oder Diethem verwendet. Die Alkohole und die Mono- oder Diether müssen mindestens 2 freie Hydroxylgruppen und nicht mehr als zwei C-O-C-Bindungen aufweisen.

Zur Herstellung der erfindungsgemäßen Zusammensetzungen in Schritt a) geeignete zweioder höherwertige Alkohole mit 2 bis 8 C-Atomen sind bekannt. Geeignet und bevorzugt sind aliphatische, sowohl lineare als auch verzweigte Alkohole. Gut geeignet sind zweiwertige Alkohole wie beispielsweise Ethylenglykol, 1,3-Propylenglykol, 1,2-Propylenglykol, 1,4-Butandiol, 1,5-Pentandiol, Neopentylglykol und 1,6-Hexandiol. Gut geeignet sind drei- und mehrwertige Alkohole wie beispielsweise Glycerin, Trimethylolpropan sowie Pentaerythrit. Unter den höherwertigen Alkoholen sind die dreiwertigen bevorzugt. Besonders gut geeignet sind 1,2-Propylenglykol und 1,1,1-Trimethylolpropan. Auch in Schritt a) verwendbare Mono- oder Diether sind bekannt. Sie bestehen z. B. aus zwei oder drei miteinander veretherten Molekülen zwei- oder höherwertiger Alkohole und haben mindestens zwei freie Hydroxylgruppen und nicht mehr als zwei C-O-C-Bindungen (Etheralkohole). Gut geeignet sind Monoether wie beispielsweise Diethylenglykol oder Dipropylenglykol sowie Diether wie Triethylenglykol oder Tripropylenglykol. Bei der Umsetzung mit mehreren hydroxyfunktionellen Komponenten - Alkoholen und/oder Ethem - in Schritt a) können diese sowohl im Gemisch als auch stufenweise mit der Diisocyanatkomponente umgesetzt werden.

Zur Umsetzung in Schritt b) einsetzbare organische Amine mit zwei oder mehr alkoholischen Hydroxylgruppen sind bekannt. Zur Herstellung der erfindungsgemäßen Zusammensetzungen werden in Schritt b) bevorzugt sekundäre oder tertiäre Amine eingesetzt, es können jedoch auch primäre Amine verwendet werden, deren an Stickstoff gebundener organischer Rest mindestens 2 alkoholische Hydroxylgruppen enthält. Unter den sekundären Aminen sind beispielsweise Diethanol- oder Dipropanolamin gut geeignet. Bevorzugt geeignet sind tertiäre Amine der allgemeinen Formel (A),

R_{3-y}N(R'-OH)_{y} (A)

worin R ein Alkylrest mit 1 bis 18, vorzugsweise 1 bis 4 C-Atomen, R' ein linearer oder verzweigter Alkylenrest mit 2 bis 4 C-Atomen und y die Zahl 2 oder 3 ist, darunter alkoxylierte Amine, wie beispielsweise N-Methyl-, N-Dodecyl- oder N-Stearyldiethanolamin, sowie auch Triethanolamin.

Für die Herstellung der erfindungsgemäßen Zusammensetzungen ist es wichtig, daß eine gewisse Verzweigung der erzielten Umsetzungsprodukte vorliegt. Dies wird dadurch erzielt, daß mindestens eine der in Schritt a) oder b) mit Isocyanatgruppen umgesetzten Verbindungen (Alkohol, Ether, Amin) mindestens drei alkoholische Hydroxylgruppen enthält. Beispielsweise wird in Schritt a) Propylenglykol und in Schritt b) Triethanolamin eingesetzt oder in Schritt a) wird Trimethylolpropan und in Schritt b) N-Methyldiethanolamin eingesetzt Über Umsetzungsbedingungen, z. B. Verzweigungsgrad, kann eine Gelierung vermieden werden.

Schritt a) wird bevorzugt mit solchen Mengen an Diisocyanaten und Alkoholen und/oder Ethem durchgeführt, daß für 1 Äquivalent an Isocyanatgruppen zwischen 0,1 und 0,5 Äquivalente an alkoholischen Hydroxylgruppen eingesetzt werden. Für diesen Fall wird anschließend Schritt b) bevorzugt mit solchen Mengen an Umsetzungsprodukten aus Schritt a) und alkoholische Hydroxylgruppen enthaltenden Aminen durchgeführt, daß für 1 Äquivalent an in Schritt a) eingesetzten Isocyanatgruppen zwischen 0,05 und 0,5 Äquivalente an alkoholischen Hydroxylgruppen eingesetzt werden. Schritt a) und Schritt b) werden mit solchen Mengen an Diisocyanaten, Alkoholen und/oder Ethern und Aminen durchgeführt, daß die nach Schritt a) und nach Schritt b) erhaltenen Umsetzungsprodukte noch freie Isocyanatgruppen enthalten. Die Mengen an Diisocyanat, Alkohol und/oder Ethem und Amin werden vorzugsweise so gewählt, daß für 1 Äquivalent an in Schritt a) eingesetzten Isocyanatgruppen die Summe der in Schritt a) und b) eingesetzten Äquivalente an alkoholischen Hydroxylgruppen 0,7 nicht überschreitet. Besonders bevorzugt werden für 1 Äquivalent an Isocyanatgruppen in Schritt a) 0,3 bis 0,5 Äquivalente und für diesen Fall in Schritt b) 0,05 bis 0,3 Äquivalente an alkoholischen Hydroxylgruppen eingesetzt.

Bevorzugt sind erfindungsgemäße Zusammensetzungen, bei denen in Schritt a) als Komponente II 1,2-Propylenglykol oder ein Gemisch aus 1,2-Propylenglykol und einem oder mehreren Mono- oder Diethern des 1,2-Propylenglykols, wobei diese Ether jeweils zwei Hydroxylgruppen aufweisen, verwendet wird. Besonders bevorzugt sind erfindungsgemäße Zusammensetzungen, bei denen in Schritt a) als Komponente I ein Diisocyanat oder ein Gemisch von Diisocyanaten in Gegenwart eines freie Isocyanatgruppen enthaltenden Umsetzungsprodukts, das durch Umsetzung von diesem Diisocyanat oder Diisocyanatgemisch mit einem zweiwertigen Alkohol oder mit einem Gemisch aus einem solchen Alkohol und Mono- und/oder Diethern eines solchen Alkohols erhältlich ist, zur Umsetzung mit Komponente II verwendet wird. Besonders bevorzugt sind auch erfindungsgemäße Zusammensetzungen, bei denen in Schritt a) als Komponente I ein Gemisch aus einem Diisocyanat und einem freie Isocyanatgruppen enthaltenden Umsetzungsprodukt, das durch Umsetzung von diesem Diisocyanat mit 1,2-Propylenglykol oder mit einem Gemisch aus 1,2-Propylenglykol und einem oder mehreren Mono- oder Diethem von 1,2-Propylenglykol erhältlich ist, verwendet wird. Besonders bevorzugt sind auch erfindungsgemäße Zusammensetzungen, bei denen das Gemisch aus Diisocyanat und dessen Umsetzungsprodukt erhalten wurde durch Umsetzung von Diisocyanat mit 1.2-Propylenglykol oder mit einem Gemisch aus 1,2-Propylenglykol und einem oder mehreren Mono- oder Diethem von 1,2-Propylenglykol in einem Verhältnis von 1 Äquivalent Isocyanatgruppen zu 0,1 bis 0,3 Äquivalenten alkoholischer Hydroxylgruppen.

Besonders bevorzugt sind auch erfindungsgemäße Zusammensetzungen, bei denen in Schritt a) Komponente I zuerst mit einem drei- oder höherwertigen Alkohol zu einem noch freie Isocyanatgruppen enthaltenden Produkt umgesetzt wird und das erhaltene Produkt dann in Schritt b) mit einer Verbindung der Formel (B),

R"N(CH₂CH₂OH)₂ (B)

worin R" für eine Alkylgruppe mit 1 bis 4 C-Atomen steht, zu einem noch freie Isocyanatgruppen enthaltenden Produkt umgesetzt wird.

Die in Schritt c) zur Blockierung der verbliebenen freien Isocyanatgruppen eingesetzten Blokkierungsmittel sind bekannt und beispielsweise, ohne Anspruch auf Vollständigkeit, in der EP-A 537 578 beschrieben. Gut geeignet sind Ketonoxime, besonders gut geeignet ist Butanonoxim. Schritt c) wird mit solchen Mengen an Blockierungsmitteln und unter solchen Bedingungen durchgeführt, daß die erhaltenen Umsetzungsprodukte im Wesentlichen keine freien Isocyanatgruppen mehr aufweisen.

Die Umsetzung gemäß Schritt a), b) und/oder die Blockierung gemäß Schritt c) wird zweckmäßigerweise in homogener flüssiger Phase, bevorzugt in einem Lösungsmittel, durchgeführt. Geeignet sind polare, aprotische, organische Lösungsmittel wie beispielsweise in der EP-A 537 578 beschrieben. Gut geeignet sind beispielsweise Ester organischer Säuren oder Ether. Besonders gut geeignet sind niedrige, schwer wasserlösliche Ketone, vorzugsweise Methylisobutylketon. Die organischen Lösungsmittel können aus den erfindungsgemäßen Zusammensetzungen wieder entfernt werden, z. B. durch Destillation, vorzugsweise nach Herstellung einer wäßrigen Dispersion, die die Zusammensetzung enthält.

Die Umsetzung gemäß Schritt a) wird zweckmäßigerweise in Anwesenheit eines Katalysators durchgeführt, um eine angemessene Reaktionsgeschwindigkeit zu erzielen. Verwendet werden können alle für die Umsetzung von Isocyanatgruppen mit alkoholischen Hydroxylgruppen geeigneten Katalysatoren. Geeignet sind beispielsweise tertiäre Amine, darunter 1,4-Diazabicyclo[2.2.2]octan. Besonders gut geeignet sind organische Zinnverbindungen, wie beispielsweise Dibutylzinndilaurat, Dibutylzinndioctoat, Dioctylzinndilaurat oder Zinnoctoat. Für die Umsetzung gemäß Schritt b) oder c) ist die Anwesenheit eines Katalysators nicht erforderlich, der bei der Umsetzung gemäß Schritt a) eingesetzte Katalysator wird aber zweckmäßigerweise aus dem bei Schritt a) erhaltenen Produkt nicht entfernt, bevor die Umsetzungen gemäß Schritt b) und c) durchgeführt werden.

Im Normalfall wird die Umsetzung gemäß Schritt a) und b) bei einer Temperatur von 0 bis 150°C und die Blockierung gemäß Schritt c) bei einer Temperatur von 0 bis 100°C durchgeführt. Bevorzugt wird die Umsetzung gemäß Schritt a), b) und c) bei einer Temperatur von 20 bis 90°C, besonders bevorzugt bei 40 bis 80°C durchgeführt.

Es ist vorteilhaft, vor allem mit Hinsicht auf Handhabung wie auch Umwelt, die erfindungsgemäßen Zusammensetzungen als wäßrige Dispersionen herzustellen und zu verwenden. Zu diesem Zweck wird das bei Schritt c) erhaltene Umsetzungsprodukt in Wasser dispergiert. Da die bei Schritt c) erhaltenen Umsetzungsprodukte im Normalfall mit Wasser keine stabilen Dispersionen bilden, werden zu diesem Zweck geeignete Dispergatoren in dem Fachmann geläufigen Konzentrationen eingesetzt. Als Dispergatoren geeignet sind nichtionische Tenside, beispielsweise Alkoxylate von Fettalkoholen, Fettsäuren und Sorbitanestem wie auch Ethylenoxid/Propylenoxid-Blockcopolymere und Aminoxide. Als Dispergatoren geeignet sind auch kationische Tenside, beispielsweise Tetraalkylammoniumsalze oder ethoxylierte Alkylamine und deren Salze sowie alkoxylierte und quatemisierte Alkylamine. Besonders gut geeignet in einer Reihe von Fällen ist ethoxyliertes Ricinusöl mit durchschnittlich 10 bis 50, besonders bevorzugt 25 bis 40, Ethylenoxideinheiten. Geeignete Dispergatoren können sowohl einzeln als auch in Mischungen von zwei oder mehreren Dispergatoren eingesetzt werden. Gut geeignet sind beispielsweise Mischungen von ethoxyliertem Ricinusöl mit Alkoxylaten von Fettalkoholen oder von Fettsäuren. Bei oder nach der Dispergierung kann der pH-Wert auf den für die Stabilität der Dispersion und den für den Verwendungszweck optimalen Bereich eingestellt werden. Im Normalfall wird der pH-Wert der Dispersionen auf einen Wert von 1,5 bis 9 eingestellt, vorzugsweise von 2,5 bis 4. Die Einstellung des pH-Wertes kann mit den dem Fachmann bekannten Mitteln, beispielsweise organischen oder anorganischen Säuren, erfolgen.

Im Normalfall wird für die Herstellung der Dispersionen folgendermaßen vorgegangen : Wasser, ein Dispergator oder ein Dispergatorengemisch und gegebenenfalls weitere Komponenten werden homogenisiert und in dieses Gemisch wird mittels eines mechanischen Schnellrührers das durch Schritt c) erhaltene Umsetzungsprodukt sowie gegebenenfalls die zur Einstellung des pH-Wertes eingesetzte Säure fein verteilt. Die Säure kann auch bereits vor Zugabe des Umsetzungsproduktes dem Gemisch Wasser/Dispergator hinzugefügt werden. Zur Herstellung eines Gemischs können Wasser, Dispergatoren, Umsetzungsprodukt, Säure und weitere Komponenten in jeder beliebigen sinnvollen Reihenfolge eingesetzt werden. Das erhaltene Gemisch kann mit einer Hochdruckhomogenisiermaschine bei einem Druck von 100 bis 500 bar, vorzugsweise 200 bis 300 bar, in eine stabile, feinteilige Dispersion überführt werden. Sowohl Mischung als auch Hochdruckhomogenisierung können bei normaler oder erhöhter Temperatur durchgeführt werden. Zu tiefe Temperaturen bergen die Gefahr einer Produktausfällung aus der Dispersion, die Temperaturobergrenze wird durch den Siedepunkt des Gemischs Wasser/Lösungsmittel bestimmt. Vorzugsweise wird Schritt d) bei 20-40°C durchgeführt, die Hochdruckhomogenisierung zweckmäßigerweise unter Kühlung. Nach dem Erhalt der Dispersion wird vorzugsweise ein gegebenenfalls anwesendes Lösungsmittel entfernt, beispielsweise durch Destillation, gegebenenfalls unter Vakuum. Die lösungsmittelfreien Dispersionen weisen oft neben den Vorteilen der Umweltfreundlichkeit und eines erhöhten Flammpunkts auch den einer erhöhten Stabilität auf.

Die bei Schritt c) oder d) erhaltenen erfindungsgemäßen Zusammensetzungen eignen sich sehr gut zur Behandlung von Fasermaterialien, besonders für die Behandlung von gewebten oder gewirkten textilen Flächengebilden. Geeignet sind sowohl Fasermaterialien aus nativer wie auch regenerierter Cellulose sowie auch Fasern tierischen Ursprungs, vorzugsweise Wolle, und auch Fasermaterialien aus synthetischen organischen Fasern, wie beispielsweise Polyesterfasern, sowie auch Gemische davon. Gegebenenfalls können zusätzlich weitere zur Textilveredlung geeignete Produkte wie beispielsweise Cellulosevernetzer, Weichgriffmittel, Silikonelastomere oder Flammschutzmittel eingesetzt werden, vorzugsweise indem man diese Produkte den Dispersionen erfindungsgemäßer Zusammensetzungen zusetzt. Geeignete hierfür zusätzlich einzusetzende Produkte sind dem Fachmann bekannt. Als Beispiele seien angeführt : Ethylenharnstoffderivate als Cellulosevemetzer, Silikon und/oder modifiziertes Polyethylen enthaltende Dispersionen als Weichgriffmittel, Phosphor enthaltende Produkte für die Flammschutzausrüstung. Die erfindungsgemäßen Zusammensetzungen eignen sich vorzugsweise zum Einsatz in Kombination mit Fluor enthaltenden Polymeren zur öl-, wasser- und schmutzabweisenden Ausrüstung von Fasermaterialien. Das Mengenverhältnis von Fluor enthaltenden Polymeren zu den erfindungsgemäßen Zusammensetzungen bezogen auf jeweils wasser- und lösungsmittel- sowie zusatzstofffreie Aktivsubstanzen kann 1 : 0,03 bis 1 : 1,5, vorzugsweise 1 : 0,3 bis 1 : 0,75 betragen. Die für die Erzielung von öl-, wasser- und schmutzabweisenden Ausrüstungen geeigneten Fluor enthaltenden Polymeren sind dem Fachmann bekannt. Genannt seien beispielsweise Perfluoralkylacrylpolymere und Perfluoralkylgruppen enthaltende Polyurethane. Die mit den erfindungsgemäßen Zusammensetzungen ausgerüsteten Fasermaterialien weisen eine gute Permanenz der Effekte nach Wasch- und Chemisch-Reinigungsvorgängen auf, wobei im Falle von öl-, wasser- und schmutzabweisenden Ausrüstungen diese Effekte vielfach auch ohne einen Bügelvorgang nach dem Reinigen erhalten bleiben (mit den sogenannten "Laundry air dry"-bzw. "Laundry tumbler dry"-Verfahren). Bei Einsatz von erfindungsgemäßen Zusammensetzungen in Form von wäßrigen Dispersionen mit ethoxyliertem Ricinusöl als Dispergator erhält man Flotten mit hervorragenden Stabilitäten und Laufeigenschaften. Eine Reihe von erfindungsgemäßen Zusammensetzungen eignen sich auch zur filz- und schrumpfarmen Ausrüstung von Wolle, was bei einem Einsatz zusammen mit Fluor enthaltenden Polymeren eine gleichzeitige öl- und wasserabweisende Ausrüstung (in einem Arbeitsgang) ermöglicht.

Vorzugsweise werden die erfindungsgemäßen Zusammensetzungen in Form wäßriger Dispersionen auf die Fasermaterialien aufgebracht, die außer dem bei Schritt c) erhaltenen Umsetzungsprodukt, Dispergator und Wasser noch weitere Bestandteile enthalten können, die oben bereits genannt wurden. Das Aufbringen der erfindungsgemäßen Zusammensetzungen auf Fasermaterialien kann mit den üblichen, dem Fachmann bekannten Methoden, wie Foulardieren, Beschichten, Sprühen, Ausziehverfahren usw. geschehen. Besonders bevorzugt ist das Aufbringen mittels Foulard. Die zweckmäßigerweise einzustellenden Konzentrationen können vom Fachmann einfach ermittelt werden. Die so behandelten Fasermaterialien werden in der üblichen Weise, z. B. durch Trocknen, fertiggestellt.

Die Erfindung wird im weiteren durch Ausführungsbeispiele veranschaulicht.

### Beispiel 1

Schritt a) : In einem Vierhalskolben mit Rückflußkühler unter Stickstoffeinleitung während des gesamten Ansatzes (Schritte a) bis c)) wurden 450 g Komponente I (2,5 Äquivalente bezogen auf freie Isocyanatgruppen) und 33,5 g 1,1,1-Trimethylolpropan (0,75 Äquivalente bezogen auf Hydroxylgruppen) in 720 g Methylisobutylketon bei 40°C unter Rühren gelöst. Als Komponente I wurde ein Umsetzungsprodukt aus einem Isomerengemisch von Diphenylmethandiisocyanat mit einem Gemisch aus 1,2-Propylenglykol, Dipropylenglykol und Tripropylenglykol, wobei das Umsetzungsprodukt noch etwa 65 Gew.-% nicht umgesetztes Diphenylmethandiisocyanat enthielt und im wesentlichen frei von Verbindungen mit freien Hydroxylgruppen war, eingesetzt. Bei dem Gemisch aus isomeren Diisocyanaten handelt es sich um ein beispielsweise von den Firmen Dow Chemical oder Bayer handelsüblich erhältliches Gemisch von isomeren Diphenylmethandiisocyanaten, das als Isomer mit dem größten Gewichtsanteil 4,4'-Diphenylmethandiisocyanat enthält. Bei dem Alkoholgemisch handelt es sich um ein Gemisch aus etwa 5 Gew.-% 1,2-Propylenglykol, 15 Gew.-% Dipropylenglykol und 80 Gew.-% Tripropylenglykol. Der erhaltenen Lösung wurden unter Rühren 0,6 g Dibutylzinndilaurat, gelöst in 5,4 g Methylisobutylketon, hinzugefügt. Innerhalb von drei Minuten wurde ein Temperaturanstieg auf 54°C verzeichnet. Die Lösung wurde anschließend im Wasserbad bei 42°C für 30 Minuten nachgerührt.

Schritt b) Anschließend wurden der Lösung 14,9 g N-Methyldiethanolamin (0,25 Äquivalente bezogen auf Hydroxylgruppen), gelöst in 90 g Methylisobutylketon, hinzugefügt. Innerhalb von fünf Minuten wurde ein Temperaturanstieg von 40 auf 45°C verzeichnet. Die Lösung wurde anschließend im Wasserbad bei 42°C für 30 Minuten nachgerührt.

Schritt c): Anschließend wurden der Lösung 130,7 g Butanonoxim (1,5 Äquivalente), gelöst in 125 g Methylisobutylketon, hinzugefügt. Innerhalb einer Minute wurde ein Temperaturanstieg auf 61°C verzeichnet. Die Lösung wurde anschließend im Wasserbad bei 42°C für 30 Minuten nachgerührt. Erhalten wurde ein leicht viskoses, leicht trübes, nach Prüfung mit dem Infrarot-Spektrometer NCO-freies Produkt. Das Produkt wurde mit Methylisobutylketon auf 1573 g aufgefüllt, was einem Gehalt von 40 Gew.-% Wirksubstanz entspricht.

Schritt d): 500 g der in Schritt c) erhaltenen Lösung (mit 200 g Wirksubstanz) wurden bei 20°C mit einem Schnellrührgerät (Ultra-Turrax) in eine Lösung bestehend aus
20 g EMULSOGEN EL
30 g 1,2-Propylenglykol
550 g Leitungswasser,
hergestellt bei Raumtemperatur, einturbiniert. EMULSOGEN EL ist ein ethoxyliertes Ricinusöl mit durchschnittlich 36 bis 38 Ethylenoxideinheiten und kann von der Firma Hoechst AG bezogen werden. Der pH-Wert der erhaltenen Mischung betrug 6,9. Dieser wurde durch tropfenweise Zugabe von etwa 30 %-iger Salzsäure auf 2,8 eingestellt. Die Mischung wurde für weitere drei Minuten turbiniert und anschließend in vier Passagen über eine Hochdruckhomogenisiermaschine (Hersteller Manton-Gaulin) bei etwa 250 bar Arbeitsdruck homogenisiert. Die Anfangstemperatur der Mischung betrug 20°C, die Endtemperatur der nach der vierten Passage erhaltenen Dispersion betrug 35°C.

Anschließend wurde in einem Rotationsverdampfer bei 70°C Badtemperatur unter Vakuum das Lösungsmittel Methylisobutylketon zusammen mit einem Teil des Wassers abdestilliert. Daraufhin wurde eine Trockensubstanzbestimmung durchgeführt und die daraus errechnete notwendige Wassermenge zugegeben, um eine Dispersion mit einem Trockensubstanzgehalt von 30 Gew.-% zu erhalten. Die erhaltene Dispersion wies eine gute Stabilität gegenüber mechanischen und thermischen Einflüssen auf.

### Beispiel 2

Schritt a): In einem Vierhalskolben mit Rückflußkühler unter Stickstoffeinleitung während des gesamten Ansatzes (Schritte a) bis c)) wurden 70 g 2,4-Toluylendiisocyanat (0,8 Äquivalente bezogen auf freie Isocyanatgruppen) mit einem Gehalt von etwa 5% an 2,6-Isomerem und 8 g 1,1,1-Trimethylolpropan (0,18 Äquivalente bezogen auf Hydroxylgruppen) in 175 g Methylisobutylketon bei 60°C unter intensivem Rühren gelöst. Anschließend wurde die erhaltene Lösung auf 25°C abgekühlt. Der Lösung wurden unter Rühren 0,2 g Dibutylzinndilaurat, gelöst in 1,8 g Methylisobutylketon, hinzugefügt. Ein Temperaturanstieg von 25 auf 38°C wurde verzeichnet. Die Lösung wurde anschließend für 30 Minuten nachgerührt. Dabei sank die Temperatur auf 28°C.

Schritt b): Anschließend wurden der Lösung 3,5 g Triethanolamin (0,06 Äquivalente bezogen auf Hydroxylgruppen), gelöst in 30 g Methylisobutylketon, hinzugefügt. Ein Temperaturanstieg auf 34°C wurde verzeichnet. Die Lösung wurde anschließend für 30 Minuten nachgerührt. Dabei sank die Temperatur auf 27°C.

Schritt c): Anschließend wurden der Lösung 48,8 g Butanonoxim (0,56 Äquivalente), gelöst in 40 g Methylisobutylketon, hinzugefügt. Ein Temperaturanstieg auf 57°C wurde verzeichnet. Die Lösung wurde anschließend für 30 Minuten nachgerührt. Dabei sank die Temperatur auf 32°C. Erhalten wurde ein leicht viskoses, leicht trübes, nach Prüfung mit dem Infrarot-Spektrometer NCO-freies Produkt. Die Wirksubstanz der erhaltenen Lösung betrug 129 g oder etwa 33%.

Schritt d): Die gesamte in Schritt c) erhaltene Lösung wurde bei 35°C mit einem Schnellrührgerät (Ultra-Turrax) in eine Lösung bestehend aus
10 g MARLIPAL O 13/500
3 g DEHYQUART AU 56
22 g Monoethylenglykol
350 g Leitungswasser,
hergestellt bei 35°C, einturbiniert. MARLIPAL O 13/500 ist ein ethoxylierter Oxoalkohol und kann von der Firma Hüls AG bezogen werden. DEHYQUART AU 56 ist ein quartäres Ammoniummethylsulfat und kann von der Firma Henkel bezogen werden. Der pH-Wert der erhaltenen Mischung betrug 6,1. Dieser wurde durch tropfenweise Zugabe von etwa 30 %-iger Salzsäure auf 3,2 eingestellt. Die Mischung wurde für weitere drei Minuten turbiniert und anschließend in vier Passagen über eine Hochdruckhomogenisiermaschine (Hersteller Manton-Gaulin) bei etwa 250 bar Arbeitsdruck homogenisiert. Die Anfangstemperatur der Mischung betrug 20°C, die Endtemperatur der nach der vierten Passage erhaltenen Dispersion betrug 35°C.

Anschließend wurde in einem Rotationsverdampfer bei 70°C Badtemperatur unter Vakuum das Lösungsmittel Methylisobutylketon zusammen mit einem Teil des Wassers abdestilliert. Daraufhin wurde eine Trockensubstanzbestimmung durchgeführt und die daraus errechnete notwendige Wassermenge zugegeben, um eine Dispersion mit einem Trockensubstanzgehalt von 30 Gew.-% zu erhalten. Die erhaltene Dispersion wies eine gute Stabilität gegenüber mechanischen und thermischen Einflüssen auf.

### Beispiel 3

Schritt a): In einem Vierhalskolben mit Rückflußkühler unter Stickstoffeinleitung während des gesamten Ansatzes (Schritte a) bis c)) wurden 75 g der auch in Beispiel 1 eingesetzten Komponente I (0,416 Äquivalente bezogen auf freie Isocyanatgruppen) und 5,6 1,1,1-Trimethylolpropan (0,126 Äquivalente bezogen auf Hydroxylgruppen) in 110 g Methylisobutylketon bei 40°C unter Rühren gelöst. Der erhaltenen Lösung wurden unter Rühren 0,1 g Dibutylzinndilaurat, gelöst in 0,9 g Methylisobutylketon, hinzugefügt. Innerhalb einer Minute wurde ein Temperaturanstieg auf 55°C verzeichnet. Die Lösung wurde anschließend im Wasserbad bei 41°C für 30 Minuten nachgerührt.

Schritt b): Anschließend wurden der Lösung 2,38 g N-Methyldiethanolamin (0,04 Äquivalente bezogen auf Hydroxylgruppen), gelöst in 40 g Methylisobutylketon, hinzugefügt. Innerhalb einer Minute wurde ein Temperaturanstieg von 40 auf 45°C verzeichnet. Die Lösung wurde anschließend im Wasserbad bei 41°C für 30 Minuten nachgerührt.

Schritt c): Anschließend wurden der Lösung 21,75 g Butanonoxim (0,25 Äquivalente), gelöst in 20 g Methylisobutylketon, hinzugefügt. Innerhalb einer Minute wurde ein Temperaturanstieg auf 59°C verzeichnet. Die Lösung wurde anschließend im Wasserbad bei 41°C für 30 Minuten nachgerührt. Erhalten wurde ein leicht viskoses, weißlich trübes, nach Prüfung mit dem Infrarot-Spektrometer NCO-freies Produkt. Das Produkt hatte einen Wirksubstanzgehalt von etwa 104 g.

Schritt d): Die in Schritt c) erhaltene Lösung wurde bei 20°C mit einem Schnellrührgerät (Ultra-Turrax) in eine Lösung bestehend aus
5,5 g EMULSOGEN EL
5,5 g IMBENTIN T/400 G
16 g 1,2-Propylenglykol
290 g Leitungswasser,
hergestellt bei Raumtemperatur, einturbiniert. IMBENTIN T/400 G ist ein ethoxylierter Tridecylalkohol mit 40 Ethylenoxideinheiten und kann von der Firma Dr. W. Kolb AG, Hedingen, Schweiz, bezogen werden. Der pH-Wert der erhaltenen Mischung betrug 5,7. Dieser wurde durch tropfenweise Zugabe von etwa 30 %-iger Salzsäure auf 2,8 eingestellt. Die Mischung wurde für weitere drei Minuten turbiniert und anschließend in vier Passagen über eine Hochdruckhomogenisiermaschine (Hersteller Manton-Gaulin) bei etwa 250 bar Arbeitsdruck ohne Kühlung homogenisiert. Die Anfangstemperatur der Mischung betrug 20°C, die Endtemperatur der nach der vierten Passage erhaltenen Dispersion betrug 35°C.

Anschließend wurde in einem Rotationsverdampfer bei 70°C Badtemperatur unter Vakuum das Lösungsmittel Methylisobutylketon zusammen mit einem Teil des Wassers abdestilliert. Daraufhin wurde eine Trockensubstanzbestimmung durchgeführt und die daraus errechnete notwendige Wassermenge zugegeben, um eine Dispersion mit einem Trockensubstanzgehalt von 30 Gew.-% zu erhalten. Die erhaltene Dispersion wies eine gute Stabilität gegenüber mechanischen und thermischen Einflüssen auf.

Die Erfindung wird im weiteren durch Anwendungsbeispiele veranschaulicht. Bei der Beurteilung der Ergebnisse wurden die nachfolgend beschriebenen Testmethoden angewandt. Vor Durchführung der Tests wurden die Gewebeproben nach der Ausrüstung 24 Stunden bei 20°C/65 % rel. Feuchte gelagert.

Die ölabweisende Wirkung wurde nach AATCC 118-1978 bestimmt. Hierbei wurde die Benetzung durch 8 verschiedene flüssige Kohlenwasserstoffe geprüft; die Bewertungsskala dieser Testmethode umfaßt Noten von 1 bis 8, wovon Note 8 die beste (höchster Abweisungseffekt) ist.

Die wasserabweisende Wirkung wurde sowohl nach AATCC 22-1980 (sog. Spraytest) als auch nach DIN 53888 (sogenannter Bundesmann-Beregnungstest) durchgeführt. Bei diesem letzteren Test wird der sog. "Abperleffekt" visuell beurteilt (für jedes Gewebe dreimal, u. zw. nach 1, 5 und 10 Minuten Beregnungszeit), wobei Noten von 1 (schlechteste Note) bis 5 (beste Note: Wasser perlt ohne Benetzung ab) vergeben werden und anschließend die Wasseraufnahme in Gew.-% bestimmt. Beim Spraytest wird ebenfalls die Benetzung visuell beurteilt, die Notenskala reicht von 0 bis 100 (100 = beste Note, d.h. geringste Benetzung). Die obengenannten AATCC-Testmethoden sind dem "AATCC (American Association of Textile Chemists and Colorists) Technical Manual" Vol 58, 1983, Seiten 248, 270, 271 entnommen.

### Anwendungsbeispiel 1 (erfindungsgemäß)

Eine Ausrüstungsflotte mit folgender Zusammensetzung wurde angesetzt:
10 g/l der in Beispiel 1 erhaltenen Dispersion
40 g/l Fluor enthaltendes Polymer
5 g/l Oberflächenaktive Zubereitung
1 g/l Essigsäure 60 Gew.-%
Rest Wasser.

Als Fluor enthaltendes Polymer wurde eine wäßrige Dispersion mit einem Gehalt von 15 Gew.-% eines Perfluoralkylacrylcopolymers und als oberflächenaktive Zubereitung eine wäßrige Lösung eines ethoxylierten Fettalkohols und eines araliphatischen Etheralkohols eingesetzt.

Die so erhaltene Ausrüstungsflotte wurde bei Raumtemperatur mittels Foulard auf ein grünes Wollgewebe mit einer Flottenaufnahme von etwa 90 Gew.-%, bezogen auf das Warengewicht, aufgebracht. Das Gewebe wurde dann für 10 Minuten bei 110°C in einem Trockenschrank getrocknet und anschließend für 5 Minuten bei 150°C kondensiert. Das Gewebe wurde jedesmal nach den Wäschen bzw. nach dem Chemisch-Reinigen gebügelt.

### Anwendungsbeispiel 2 (erfindungsgemäß)

Anwendungsbeispiel 1 wurde wiederholt, mit dem Unterschied, daß anstatt der in Beispiel 1 erhaltenen Dispersion für die angesetzte Ausrüstungsflotte 10 g/l der in Beispiel 2 erhaltenen Dispersion verwendet wurden.

### Anwendungsbeispiel 3 (erfindungsgemäß)

Anwendungsbeispiel 1 wurde wiederholt, mit dem Unterschied, daß anstatt der in Beispiel 1 erhaltenen Dispersion für die angesetzte Ausrüstungsflotte 10 g/l der in Beispiel 3 erhaltenen Dispersion verwendet wurden.

### Anwendungsbeispiel 4 (nicht erfindungsgemäß)

Anwendungsbeispiel 1 wurde wiederholt, mit dem Unterschied, daß anstatt der in Beispiel 1 erhaltenen Dispersion für die angesetzte Ausrüstungsflotte 10 g/l einer Dispersion verwendet wurden, die 30 Gew.-% eines Umsetzungsproduktes von Toluylendiisocyanat mit Trimethylolpropan, dessen freie NCO-Gruppen mit Butanonoxim blockiert wurden, enthielt (also ein Produkt, bei dessen Herstellung Schritt b) nicht durchgeführt wurde).

### Anwendungsbeispiel 5 (nicht erfindungsgemäß)

Anwendungsbeispiel 1 wurde wiederholt, mit dem Unterschied, daß anstatt der in Beispiel 1 erhaltenen Dispersion für die angesetzte Ausrüstungsflotte 10 g/l einer Dispersion verwendet wurden, die etwa 30 Gew.-% eines Produktes, erhalten aus Diphenylmethandiisocyanat durch Blockierung der NCO-Gruppen mit Butanonoxim, enthielt (also ein Produkt, bei dessen Herstellung Schritt a) und b) nicht durchgeführt wurde).

Die in den Anwendungsbeispielen 1 bis 5 ausgerüsteten Wollgewebe weisen die in Tabelle 1 angeführten Testergebnisse auf.

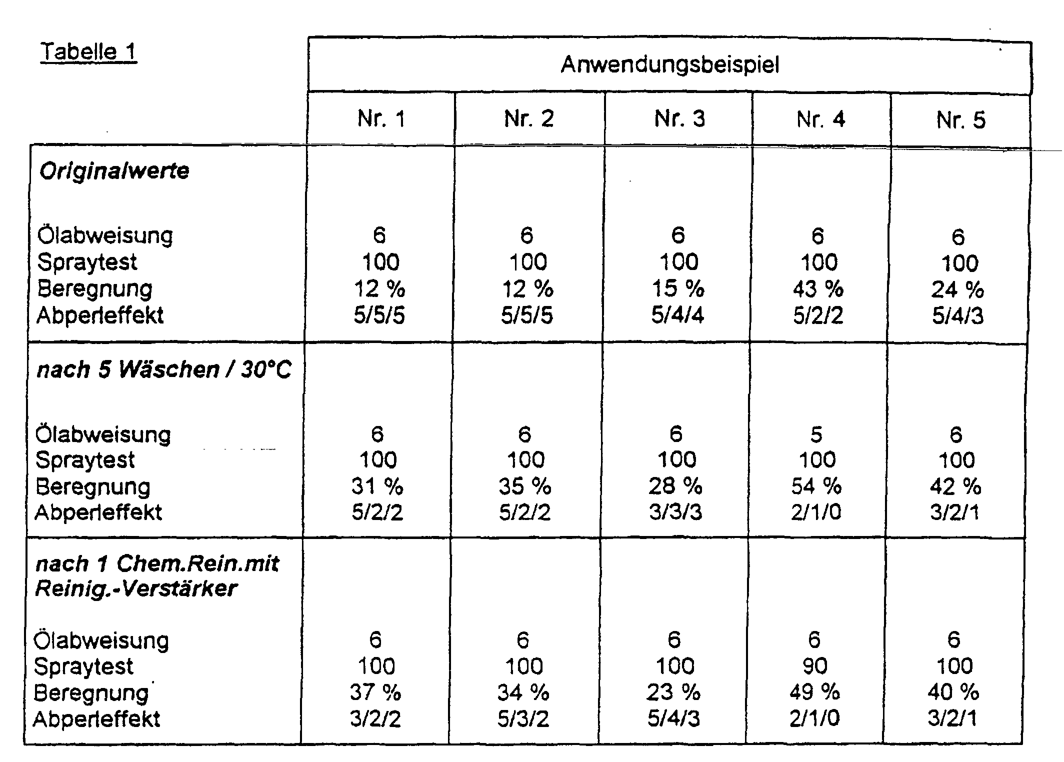

### Anwendungsbeispiel 6 (erfindungsgemäß)

Eine Ausrüstungsflotte mit folgender Zusammensetzung wurde angesetzt:
30 g/l der in Beispiel 1 erhaltenen Dispersion
70 g/l Fluor enthaltendes Polymer
5 g/l Oberflächenaktive Zubereitung
1 g/l Essigsäure 60 Gew.-%
15 g/l Alkylmodifiziertes Melamin/Formaldehyd-Derivat
5 g/l Säurespender auf Magnesiumsalz-Basis
Rest Wasser.

Als Fluor enthaltendes Polymer wurde eine wäßrige Dispersion mit einem Gehalt von 12,5 Gew.-% eines Perfluoralkylacrylcopolymers und als oberflächenaktive Zubereitung eine wäßrige Lösung eines ethoxylierten Fettalkohols und eines araliphatischen Etheralkohols eingesetzt.

Die so erhaltene Ausrüstungsflotte wurde bei Raumtemperatur mittels Foulard auf ein Gewebe aus einer Mischung Polyester/Baumwolle (65% : 35%) mit einer Flottenaufnahme von etwa 62 Gew.-%, bezogen auf das Warengewicht, aufgebracht. Das Gewebe wurde dann für 10 Minuten bei 110°C in einem Trockenschrank getrocknet und anschließend für 5 Minuten bei 150°C kondensiert. Das Gewebe wurde jedesmal nach den Wäschen bzw. nach dem Chemisch-Reinigen gebügelt.

### Anwendungsbeispiel 7 (erfindungsgemäß)

Anwendungsbeispiel 6 wurde wiederholt, mit dem Unterschied, daß anstatt der in Beispiel 1 erhaltenen Dispersion für die angesetzte Ausrüstungsflotte 30 g/l der in Beispiel 2 erhaltenen Dispersion verwendet wurden.

### Anwendungsbeispiel 8 (erfindungspemäß)

Anwendungsbeispiel 6 wurde wiederholt, mit dem Unterschied, daß anstatt der in Beispiel 1 erhaltenen Dispersion für die angesetzte Ausrüstungsflotte 30 g/l der in Beispiel 3 erhaltenen Dispersion verwendet wurden.

### Anwendungsbeispiel 9 (nicht erfindungsgemäß)

Anwendungsbeispiel 6 wurde wiederholt, mit dem Unterschied, daß anstatt der in Beispiel 1 erhaltenen Dispersion für die angesetzte Ausrüstungsflotte 30 g/l einer Dispersion verwendet wurden, die 30 Gew.-% eines Umsetzungsproduktes von Toluylendiisocyanat mit Trimethylolpropan, dessen freie NCO-Gruppen mit Butanonoxim blockiert wurden, enthielt (also ein Produkt, bei dessen Herstellung Schritt b) nicht durchgeführt wurde).

### Anwendungsbeispiel 10 (nicht erfindungsgemäß)

Anwendungsbeispiel 6 wurde wiederholt, mit dem Unterschied, daß anstatt der in Beispiel 1 erhaltenen Dispersion für die angesetzte Ausrüstungsflotte 30 g/l einer Dispersion verwendet wurden, die etwa 30 Gew.-% eines Produktes, erhalten aus Diphenylmethandiisocyanat durch Blockierung der NCO-Gruppen mit Butanonoxim, enthielt (also ein Produkt, bei dessen Herstellung Schritt a) und b) nicht durchgeführt wurde).

Die in den Anwendungsbeispielen 6 bis 10 ausgerüsteten Gewebe aus Baumwolle/Polyester weisen die in Tabelle 2 angeführten Testergebnisse auf.

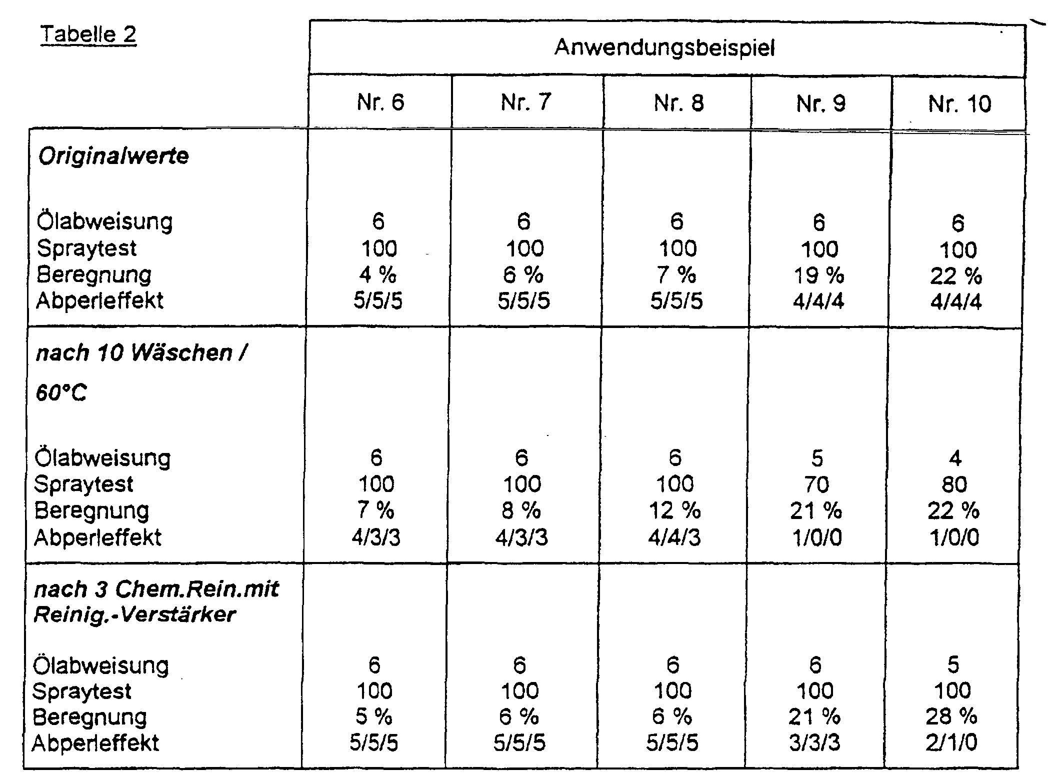

### Anwendungsbeispiel 11 (erfindungsgemäß)

Eine Ausrüstungsflotte mit folgender Zusammensetzung wurde angesetzt
6 g/l der in Beispiel 1 erhaltenen Dispersion
30 g/l Fluor enthaltendes Polymer
2 g/l Essigsäure 60 Gew.-%
Rest Wasser.

Als Fluor enthaltendes Polymer wurde eine wäßrige Dispersion mit einem Gehalt von 15 Gew.-% eines Perfluoralkylacrylcopolymers eingesetzt.

Die so erhaltene Ausrüstungsflotte wurde bei Raumtemperatur mittels Foulard auf ein Polyestertaft mit einer Flottenaufnahme von etwa 45 Gew.-%, bezogen auf das Warengewicht, aufgebracht. Das Gewebe wurde dann für 10 Minuten bei 110°C in einem Trockenschrank getrocknet und anschließend für 5 Minuten bei 150°C kondensiert. Zur Bestimmung der LADund LTD-Eigenschaften (LAD steht für "Laundry air dry" und LTD für "Laundry tumbler dry") wurde das ausgerüstete Gewebe jeweils nach der Wäsche an der Luft getrocknet bzw. in einem Wäschetrockner (Tumbler) für 20 bis 25 Minuten bei 65°C getrocknet.

### Anwendungsbeispiel 12 (erfindungsgemäß)

Anwendungsbeispiel 11 wurde wiederholt, mit dem Unterschied, daß anstatt der in Beispiel 1 erhaltenen Dispersion für die angesetzte Ausrüstungsflotte 30 g/l der in Beispiel 2 erhaltenen Dispersion verwendet wurden.

### Anwendungsbeispiel 13 (nicht erfindungsgemäß)

Anwendungsbeispiel 11 wurde wiederholt, mit dem Unterschied, daß anstatt der in Beispiel 1 erhaltenen Dispersion für die angesetzte Ausrüstungsflotte 30 g/l einer Dispersion verwendet wurden, die 30 Gew.-% eines Umsetzungsproduktes von Toluylendiisocyanat mit Trimethylolpropan, dessen freie NCO-Gruppen mit Butanonoxim blockiert wurden, enthielt (also ein Produkt, bei dessen Herstellung Schritt b) nicht durchgeführt wurde).

### Anwendungsbeispiel 14 (nicht erfindungsgemäß)

Anwendungsbeispiel 11 wurde wiederholt, mit dem Unterschied, daß anstatt der in Beispiel 1 erhaltenen Dispersion für die angesetzte Ausrüstungsflotte 30 g/l einer Dispersion verwendet wurden, die etwa 30 Gew.-% eines Produktes, erhalten aus Diphenylmethandiisocyanat durch Blockierung der NCO-Gruppen mit Butanonoxim, enthielt (also ein Produkt, bei dessen Herstellung Schritt a) und b) nicht durchgeführt wurde).

Die in den Anwendungsbeispielen 11 bis 14 ausgerüsteten Gewebe aus Polyestertaft weisen die in Tabelle 3 angeführten Testergebnisse auf.

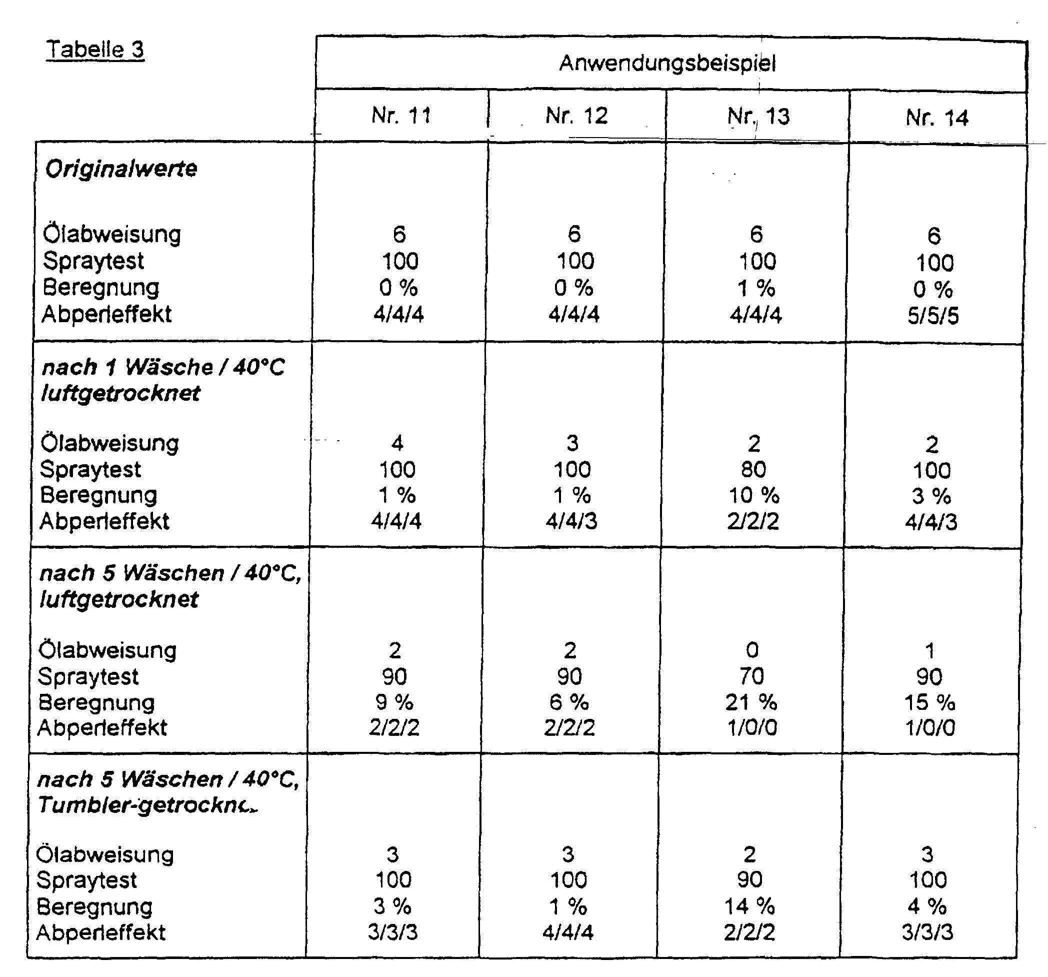

Aus den Anwendungsbeispielen 1 bis 14 ist ersichtlich, daß die erfindungsgemäßen Zusammensetzungen unterschiedlichen Fasermaterialien hervorragende öl- und wasserabweisende Eigenschaften verleihen, die auch nach mehreren Wasch- oder Reinigungsvorgängen besser erhalten bleiben als bei den nicht-erfindungsgemäßen Zusammensetzungen, auch wenn nach der Wäsche kein Bügeln vorgenommen wird.

### Anwendungsbeispiel 15 (erfindungsgemäß)

Zwei Ausrüstungsflotten mit folgender Zusammensetzung wurden angesetzt:
a) 50 g/l der in Beispiel 1 erhaltenen Dispersion
   Rest Wasser
b) 100 g/l der in Beispiel 1 erhaltenen Dispersion
   Rest Wasser.

Die so erhaltenen Ausrüstungsflotten wurden bei Raumtemperatur mittels Foulard jeweils auf ein grünes Wollgewebe mit einer Flottenaufnahme von etwa 90 Gew.-%, bezogen auf das Warengewicht, aufgebracht. Die Gewebe wurden dann für 10 Minuten bei 110°C in einem Trockenschrank getrocknet und anschließend für 5 Minuten bei 150°C kondensiert.

Bei den so behandelten Geweben wurde der Flächenschrumpf nach 5 A-Wäschen (nach ISO 6330-1984) gemessen.

### Anwendungsbeispiel 16 (erfindungsgemäß)

Anwendungsbeispiel 15 wurde wiederholt, mit dem Unterschied, daß anstatt der in Beispiel 1 erhaltenen Dispersion für die angesetzten Ausrüstungsflotten 50 bzw. 100 g/l der in Beispiel 2 erhaltenen Dispersion verwendet wurden.

### Anwendungsbeispiel 17 (nicht erfindungsgemäß)

Anwendungsbeispiel 15 wurde wiederholt, mit dem Unterschied, daß anstatt der in Beispiel 1 erhaltenen Dispersion für die angesetzten Ausrüstungsflotten 50 bzw. 100 g/l einer Dispersion verwendet wurden, die 30 Gew.-% eines Umsetzungsproduktes von Toluylendiisocyanat mit Trimethylolpropan, dessen freie NCO-Gruppen mit Butanonoxim blockiert wurden, enthielt.

### Anwendungsbeispiel 18 (nicht erfindungsgemäß)

Anwendungsbeispiel 15 wurde wiederholt, mit dem Unterschied, daß anstatt der in Beispiel 1 erhaltenen Dispersion für die angesetzten Ausrüstungsflotten 50 bzw. 100 g/l einer Dispersion verwendet wurden, die etwa 30 Gew.-% eines Produktes, erhalten aus Diphenylmethandiisocyanat durch Blockierung der NCO-Gruppen mit Butanonoxim, enthielt.

### Anwendungsbeispiel 19 (nicht erfindungsgemäß)

Bei unbehandeltem Wollgewebe wurde der Flächenschrumpf nach 5 A-Wäschen (nach ISO 6330-1984) gemessen.

Die in den Anwendungsbeispielen 15 bis 18 ausgerüsteten Wollgewebe bzw. unbehandeltes Wollgewebe weisen die in Tabelle 4 angeführten Schrumpfungen (in %) nach 5 A-Wäschen (nach ISO 6330-1984) auf.

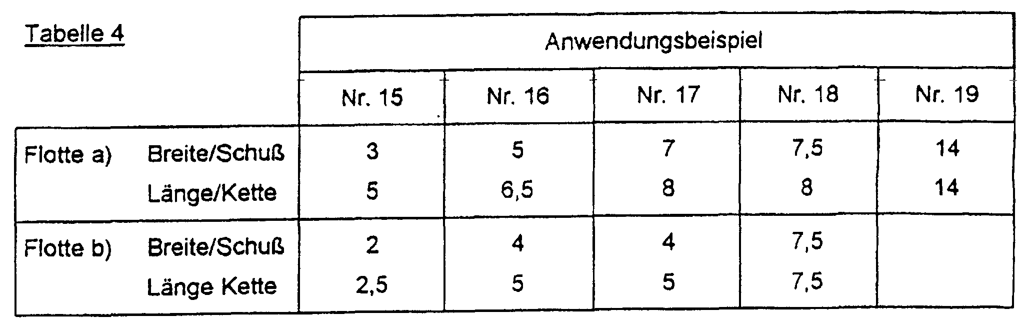

Aus den Anwendungsbeispielen 15 bis 19 ist ersichtlich, daß die erfindungsgemäßen Zusammensetzungen den Flächenschrumpf von Wolle durch Wäschen reduzieren, z. T. deutlich.

## Patentansprüche

1. Zusammensetzung, erhältlich durch folgende Verfahrensschritte:
a) Umsetzung eines Diisocyanats oder eines Gemischs von Diisocyanaten (Komponente I) mit einem oder mehreren Alkoholen mit 2 bis 8 C-Atomen und/oder mit einem oder mehreren Mono- und/oder Diethem solcher Alkohole (Komponente II), wobei diese Alkohole bzw. deren Ether mindestens zwei alkoholische Hydroxylgruppen und nicht mehr als zwei C-O-C-Bindungen aufweisen und wobei die Umsetzung so durchgeführt wird, daß das entstehende Produkt noch freie Isocyanatgruppen aufweist,
b) Umsetzung des bei Schritt a) erhaltenen Produkts mit einem organischen Amin, das zwei oder mehr alkoholische Hydroxylgruppen enthält oder einem Gemisch solcher Amine, wobei die Umsetzung so durchgeführt wird, daß das entstehende Produkt noch freie Isocyanatgruppen aufweist, mit der Maßgabe, daß mindestens ein Alkohol, ein Ether oder ein Amin von den in Schritt a) bzw. b) eingesetzten Alkoholen, Ethem und Aminen drei oder mehr alkoholische Hydroxylgruppen enthält,
c) Blockierung der freien Isocyanatgruppen des bei Schritt b) erhaltenen Produkts durch Umsetzung mit einem Blockierungsmittel,
d) ggf. Dispergierung des nach Schritt c) erhaltenen Produkts in Wasser und Einstellung des pH-Werts.

2. Zusammensetzung nach Anspruch 1, **dadurch gekennzeichnet, daß** die Umsetzung gemäß Schritt a), Schritt b) und/oder die Blockierung gemäß Schritt c) in homogener flüssiger Phase, vorzugsweise in einem Lösungsmittel durchgeführt wird und gegebenenfalls das Lösungsmittel entfernt wird, vorzugsweise nach Dispergierung gemäß Schritt d).

3. Zusammensetzung nach Anspruch 2, **dadurch gekennzeichnet, daß** als Lösungsmittel ein Keton, vorzugsweise Methylisobutylketon, verwendet wird.

4. Zusammensetzung nach einem oder mehreren der Ansprüche 1 bis 3, **dadurch gekennzeichnet, daß** die Umsetzung gemäß Schritt a), Schritt b) und/oder die Blockierung gemäß Schritt c) in Anwesenheit eines Katalysators durchgeführt wird, wobei als Katalysator vorzugsweise eine organische Zinnverbindung verwendet wird.

5. Zusammensetzung nach einem oder mehreren der Ansprüche 1 bis 4, **dadurch gekennzeichnet, daß** in Schritt a) für 1 Äquivalent an Isocyanatgruppen 0,1 bis 0,5, vorzugsweise 0,3 bis 0,5 Äquivalente alkoholische Hydroxylgruppen und in Schutt b) für 1 Äquivalent an in Schritt a) eingesetzten Isocyanatgruppen 0,05 bis 0,5, vorzugsweise 0,05 bis 0,3 Äquivalente alkoholische Hydroxylgruppen eingesetzt werden, wobei vorzugsweise für 1 Äquivalent an in Schritt a) eingesetzten Isocyanatgruppen die Summe der in Schritt a) und b) eingesetzten Äquivalente an alkoholischen Hydroxylgruppen 0,7 nicht überschreitet.

6. Zusammensetzung nach einem oder mehreren der Ansprüche 1 bis 5, **dadurch gekennzeichnet, daß** in Schritt a) ein aromatisches Diisocyanat, vorzugsweise Diphenylmethan-4,4'-diisocyanat oder ein Toluylendiisocyanat, oder ein Gemisch solcher Isocyanate verwendet wird.

7. Zusammensetzung nach einem oder mehreren der Ansprüche 1 bis 6, **dadurch gekennzeichnet, daß** in Schritt b) als organisches Amin eine Verbindung der allgemeinen Formel (A)
R_{3-y}N(R'-OH)_{y} (A)
verwendet wird, worin R ein Alkylrest mit 1 bis 18, vorzugsweise 1 bis 4 C-Atomen, R' ein linearer oder verzweigter Alkylenrest mit 2 bis 4 C-Atomen und y die Zahl 2 oder 3 ist.

8. Zusammensetzung nach Anspruch 7, **dadurch gekennzeichnet, daß** als Amin N-Methyldiethanolamin oder Triethanolamin verwendet wird.

9. Zusammensetzung nach einem oder mehreren der Ansprüche 1 bis 8, **dadurch gekennzeichnet, daß** in Schritt a) als Komponente II 1,1,1-Trimethylolpropan oder 1,2-Propylenglykol oder ein Gemisch aus 1,2-Propylenglykol und einem oder mehreren Mono- oder Diethem des 1,2-Propylenglykols verwendet wird.

10. Zusammensetzung nach einem oder mehreren der Ansprüche 1 bis 9, **dadurch gekennzeichnet, daß** in Schritt a) als Komponente I ein Diisocyanat oder ein Gemisch von Diisocyanaten in Gegenwart eines freie Isocyanatgruppen enthaltenden Umsetzungsprodukts, das durch Umsetzung von diesem Diisocyanat oder Diisocyanatgemisch mit einem zweiwertigen Alkohol oder mit einem Gemisch aus einem solchen Alkohol und Mono- und/oder Diethem eines solchen Alkohols erhältlich ist, verwendet wird.

11. Zusammensetzung nach einem oder mehreren der Ansprüche 1 bis 10, **dadurch gekennzeichnet, daß** in Schritt a) als Komponente I ein Gemisch aus einem Diisocyanat und einem freie Isocyanatgruppen enthaltenden Umsetzungsprodukt, das durch Umsetzung von diesem Diisocyanat mit 1,2-Propylenglykol oder mit einem Gemisch aus 1,2-Propylenglykol und einem oder mehreren Mono- oder Diethern von 1,2-Propylenglykol erhältlich ist, verwendet wird.

12. Zusammensetzung nach Anspruch 11, **dadurch gekennzeichnet, daß** das Gemisch aus Diisocyanat und dessen Umsetzungsprodukt erhalten wurde durch Umsetzung von Diisocyanat mit 1.2-Propylenglykol oder mit einem Gemisch aus 1,2-Propylenglykol und einem oder mehreren Mono- oder Diethern von 1,2-Propylenglykol in einem Verhältnis von 1 Äquivalent Isocyanatgruppen zu 0,1 bis 0,3 Äquivalenten alkoholischer Hydroxylgruppen.

13. Zusammensetzung nach einem oder mehreren der Ansprüche 1 bis 12, **dadurch gekennzeichnet, daß** die Umsetzung gemäß Schritt a) und b) in einem Temperaturbereich von 0 bis 150°C, vorzugsweise 20 bis 90°C, besonders bevorzugt 40 bis 80°C, durchgeführt wird.

14. Zusammensetzung nach einem oder mehreren der Ansprüche 1 bis 13, **dadurch gekennzeichnet, daß** die Blockierung gemäß Schritt c) in einem Temperaturbereich von 0 bis 100°C, vorzugsweise 20 bis 90°C, besonders bevorzugt 40 bis 80°C, durchgeführt wird.

15. Zusammensetzung nach einem oder mehreren der Ansprüche 1 bis 14, **dadurch gekennzeichnet, daß** als Blockierungsmittel in Schritt c) ein Ketonoxim verwendet wird, vorzugsweise Butanonoxim.

16. Zusammensetzung nach einem oder mehreren der Ansprüche 1 bis 15, **dadurch gekennzeichnet, daß** in Schritt a) Komponente I mit einem drei- oder höherwertigen Alkohol zu einem noch freie Isocyanatgruppen enthaltenden Produkt umgesetzt wird und das erhaltene Produkt dann in Schritt b) mit einer Verbindung der Formel (B),
R"N(CH₂CH₂OH)₂ (B)
worin R" für eine Alkylgruppe mit 1 bis 4 C-Atomen steht, zu einem noch freie Isocyanatgruppen enthaltenden Produkt umgesetzt wird.

17. Zusammensetzung nach einem oder mehreren der Ansprüche 1 bis 16, **dadurch gekennzeichnet, daß** das nach Schritt c) erhaltene Produkt unter Einsatz eines oder mehrerer Dispergatoren, bevorzugt unter Einsatz von ethoxyliertem Ricinusöl mit durchschnittlich 10 bis 50, besonders bevorzugt 25 bis 40, Ethylenoxideinheiten, in Wasser dispergiert wird.

18. Verwendung einer Zusammensetzung gemäß einem oder mehreren der Ansprüche 1 bis 17 für die Behandlung von Fasermaterialien, vorzugsweise von gewebten oder gewirkten textilen Flächengebilden.

19. Verwendung nach Anspruch 18, **dadurch gekennzeichnet, daß** die Fasermaterialien aus nativer oder regenerierter Cellulose, Fasern tierischen Ursprungs, vorzugsweise Wolle, synthetischen organischen Fasern oder aus Gemischen davon bestehen.

20. Verwendung nach Anspruch 18 oder 19, **dadurch gekennzeichnet, daß** die Zusammensetzungen in Kombination mit Perfluoralkylgruppen enthaltenden Polymeren verwendet werden, ggf. unter Zusatz weiterer Produkte.

21. Verwendung nach einem oder mehreren der Ansprüche 18 bis 20, **dadurch gekennzeichnet, daß** die Zusammensetzungen in Form wäßriger Dispersionen auf die Fasermaterialien aufgebracht werden.

## Claims

1. A composition obtainable by the following process steps:
a) reaction of a diisocyanate or a mixture of diisocyanates (component I) with one or more alcohols having from 2 to 8 carbon atoms and/or with one or more mono- and/or diethers of such alcohols (component II), these alcohols or ethers thereof having at least two alcoholic hydroxyl groups and no more than two C-O-C bonds, and the reaction being carried out such that the product formed still has free isocyanate groups,
b) reaction of the product obtained in step a) with an organic amine containing two or more alcoholic hydroxyl groups, or a mixture of such amines, the reaction being carried out such that the product formed still has free isocyanate groups, with the proviso that at least one alcohol, one ether or one amine from amongst the alcohols, ethers and amines used in step a) and/or b) contains three or more alcoholic hydroxyl groups,
c) blocking the free isocyanate groups of the product obtained in step b) by reaction with a blocking agent,
d) optionally dispersing the product obtained after step c) in water and adjusting the pH.

2. A composition according to claim 1, wherein the reaction in step a), step b) and/or the blocking in step c) is carried out in homogeneous liquid phase, preferably in a solvent, and, optionally, the solvent is removed, preferably after dispersion in step d).

3. A composition according to claim 2, wherein the solvent used is a ketone, preferably methyl isobutyl ketone.

4. A composition according to one or more of claims 1 to 3, wherein the reaction in step a), step b) and/or the blocking in step c) is carried out in the presence of a catalyst, the catalyst used preferably being an organotin compound.

5. A composition according to one or more of claims 1 to 4, wherein, in step a), from 0.1 to 0.5, preferably from 0.3 to 0.5, equivalents of alcoholic hydroxyl groups are used per equivalent of isocyanate groups, and in step b), from 0.05 to 0.5, preferably from 0.05 to 0.3, equivalents of alcoholic hydroxyl groups are used per equivalent of isocyanate groups used in step a), in which case the sum of the equivalents of alcoholic hydroxyl groups used in step a) and b) preferably does not exceed 0.7 per equivalent of isocyanate groups used in step a).

6. A composition according to one or more of claims 1 to 5, wherein, in step a), an aromatic diisocyanate, preferably diphenylmethane 4,4'-diisocyanate or a toluylene diisocyanate, or a mixture of such isocyanates is used.

7. A composition according to one or more of claims 1 to 6, wherein the organic amine used in step b) is a compound of the general formula (A)
R_{3-y}N(R'-OH)_{y} (A)
in which R is an alkyl radical having from 1 to 18, preferably from 1 to 4, carbon atoms, R' is a linear or branched alkylene radical having from 2 to 4 carbon atoms and y is 2 or 3.

8. A composition according to claim 7, wherein the amine used is N-methyldiethanolamine or triethanolamine.

9. A composition according to one or more of claims 1 to 8, wherein component II used in step a) is 1,1,1-trimethylolpropane or 1,2-propylene glycol or a mixture of 1,2-propylene glycol and one or more mono- or diethers of 1,2-propylene glycol.

10. A composition according to one or more of claims 1 to 9, wherein as component I in step a) a diisocyanate or a mixture of diisocyanates is used in the presence of a reaction product containing free isocyanate groups which is obtainable by reaction of this diisocyanate or diisocyanate mixture with a dihydric alcohol or with a mixture of such an alcohol and mono- and/or diethers of such an alcohol.

11. A composition according to one or more of claims 1 to 10, wherein component I used in step a) is a mixture of a diisocyanate and a reaction product containing free isocyanate groups which is obtainable by reaction of this diisocyanate with 1,2-propylene glycol or with a mixture of 1,2-propylene glycol and one or more mono- or diethers of 1,2-propylene glycol.

12. A composition according to claim 11, wherein the mixture of diisocyanate and its reaction product has been obtained by reaction of diisocyanate with 1,2-propylene glycol or with a mixture of 1,2-propylene glycol and one or more mono- or diethers of 1,2-propylene glycol in a ratio of one equivalent of isocyanate groups to from 0.1 to 0.3 equivalents of alcoholic hydroxyl groups.

13. A composition according to one or more of claims 1 to 12, wherein the reaction in step a) and b) is carried out in a temperature range of from 0 to 150°C, preferably from 20 to 90°C, particularly preferably from 40 to 80°C.

14. A composition according to one or more of claims 1 to 13, wherein the blocking in step c) is carried out in a temperature range of from 0 to 100°C, preferably from 20 to 90°C, particularly preferably from 40 to 80°C.

15. A composition according to one or more of claims 1 to 14, wherein the blocking agent used in step c) is a ketone oxime, preferably butanone oxime.

16. A composition according to one or more of claims 1 to 15, wherein, in step a), component I is reacted with a tri- or polyhydric alcohol to give a product which still contains free isocyanate groups, and the resulting product is then reacted, in step b), with a compound of the formula (B),
R"N(CH₂CH₂OH)₂ (B)
in which R" is an alkyl group having from 1 to 4 carbon atoms, to give a product which still contains free isocyanate groups.

17. A composition according to one or more of claims 1 to 16, wherein the product obtained after step c) is dispersed in water using one or more dispersants, preferably using ethoxylated castor oil having, on average, from 10 to 50, particularly preferably from 25 to 40, ethylene oxide units.

18. The use of a composition according to one or more of claims 1 to 17 for treating fiber materials, preferably woven or knitted textile sheetlike structures.

19. The use according to claim 18, wherein the fiber materials comprise native or regenerated cellulose, fibers of animal origin, preferably wool, synthetic organic fibers or mixtures thereof.

20. The use according to either claim 18 or claim 19, wherein the compositions are used in combination with polymers containing perfluoroalkyl groups, optionally with the addition of further products.

21. The use according to one or more of claims 18 to 20, wherein the compositions are applied to the fiber materials in the form of aqueous dispersions.

## Revendications

1. Composition qu'on peut obtenir au moyen des étapes suivantes :
a) réaction d'un diisocyanate ou d'un mélange de diisocyanates (constituant I) sur un ou plusieurs alcools présentant 2 à 8 atomes de carbone et/ou sur un ou plusieurs mono- et/ou diéthers de tels alcools (constituant II), ces alcools ou leurs éthers présentant au moins deux groupes hydroxyle d'alcool et pas plus de deux liaisons C-O-C et la réaction étant mise en oeuvre de façon telle que le produit obtenu présente encore des groupes isocyanato libres,
b) réaction du produit obtenu à l'étape a) sur une amine organique qui présente deux ou plus de deux groupes hydroxyle d'alcool ou un mélange de telles amines, la réaction étant mise en oeuvre de façon telle que le produit formé présente encore des groupes isocyanato libres, à condition qu'au moins un alcool, un éther ou une amine pris parmi les alcools, éthers et amines utilisés à l'étape a) ou b), présente trois ou plus groupes hydroxyle d'alcool,
c) blocage des groupes isocyanato libres du produit obtenu à l'étape b) par réaction sur un agent de blocage,
d) éventuellement dispersion du produit obtenu selon l'étape c) dans l'eau et ajustement de la valeur de pH.

2. Composition selon la revendication 1, **caractérisée en ce qu'**on met en oeuvre la réaction selon l'étape a), l'étape b) et/ou le blocage selon l'étape c) en phase homogène liquide, de préférence dans un solvant et éventuellement on élimine le solvant, de préférence après avoir réalisé la dispersion selon l'étape d).

3. Composition selon la revendication 2, **caractérisée en ce qu'**on utilise comme solvant une cétone, de préférence la méthylisobutylcétone.

4. Composition selon une ou plusieurs des revendications 1 à 3, **caractérisée en ce qu'**on met en oeuvre la réaction selon l'étape a), l'étape b) et/ou le blocage selon l'étape c) en présence d'un catalyseur, en utilisant comme catalyseur un composé organique d'étain.

5. Composition selon une ou plusieurs des revendications 1 à 4, **caractérisée en ce qu'**on utilise à l'étape-a) pour 1 équivalent de groupes isocyanato de 0,1 à 0,5, de préférence de 0,3 à 0,5, équivalents de groupes hydroxyle d'alcool et on utilise à l'étape b) pour 1 équivalent de groupes isocyanato utilisés à l'étape a), de 0,05 à 0,5, de préférence de 0,05 à 0,3, équivalents de groupes hydroxyle d'alcool, où pour 1 équivalent de groupes isocyanato utilisés à l'étape a), la somme des équivalents de groupes hydroxyle d'alcool utilisés à l'étape a) et b) de préférence ne dépasse pas la valeur de 0,7.

6. Composition selon une ou plusieurs des revendications 1 à 5, **caractérisée en ce qu'**on utilise à l'étape a) un diisocyanate aromatique, de préférence le diphénylméthane-4,4'-diisocyanate ou un toluylènediisocyanate, ou un mélange de tels isocyanates.

7. Composition selon une ou plusieurs des revendications 1 à 6, **caractérisée en ce qu'**on utilise à l'étape b), en tant qu'amine organique, un composé de formule générale (A)
R_{3-y}N(R'-OH)_{y} (A),
où R représente un reste alkyle présentant 1 à 18 atomes de carbone, de préférence 1 à 4 atomes de carbone, R' représente un reste alkylène linéaire ou ramifié présentant 2 à 4 atomes de carbone et y vaut 2 ou 3.

8. Composition selon la revendication 7, **caractérisée en ce qu'**on utilise, en tant qu'amine, la N-méthyldiéthanolamine ou la triéthanolamine.

9. Composition selon une ou plusieurs des revendications 1 à 8, **caractérisée en ce qu'**on utilise à l'étape a), en tant que constituant II, le 1,1,1-triméthylolpropane ou le 1,2-propylèneglycol ou un mélange de 1,2-propylèneglycol et d'un ou plusieurs mono- ou diéthers de 1,2-propylèneglycol.

10. Composition selon une ou plusieurs des revendications 1 à 9, **caractérisée en ce qu'**on utilise à l'étape a), en tant que constituant I, un diisocyanate ou un mélange de diisocyanates en présence d'un produit de réaction contenant des groupes isocyanato libres, que l'on peut obtenir par réaction de ce diisocyanate ou de mélange de diisocyanates sur un alcool bivalent ou un mélange d'un tel alcool et de mono- et/ou diéthers d'un tel alcool.

11. Composition selon une ou plusieurs des revendications 1 à 10, **caractérisée en ce qu'**on utilise à l'étape a), en tant que constituant I, un mélange d'un diisocyanate et d'un produit de réaction présentant des groupes isocyanato libres, que l'on peut obtenir par réaction de ce diisocyanate sur le 1,2-propylèneglycol ou un mélange de 1,2-propylèneglycol et d'un ou plusieurs mono- ou diéthers de 1,2-propylèneglycol.

12. Composition selon la revendication 11, **caractérisée en ce qu'**on obtient le mélange de diisocyanate et de son produit de réaction par réaction du diisocyanate sur le 1,2-propylèneglycol ou un mélange de 1,2-propylèneglycol et d'un ou plusieurs mono- ou diéthers de 1,2-propylèneglycol, dans un rapport de 1 équivalent de groupes isocyanato à 0,1 à 0,3 équivalénts de groupes hydroxyle d'alcool.

13. Composition selon une ou plusieurs des revendications 1 à 12, **caractérisée en ce qu'**on met en oeuvre la réaction selon les étapes a) et b) dans un domaine de températures de 0 à 150°C, de préférence de 20 à 90°C, d'une manière particulièrement préférée de 40 à 80°C.

14. Composition selon une ou plusieurs des revendications 1 à 13, **caractérisée en ce qu'**on met en oeuvre le blocage selon l'étape c) dans un domaine de températures de 0 à 100°C, de préférence de 20 à 90°C, d'une manière particulièrement préférée de 40 à 80°C.

15. Composition selon une ou plusieurs des revendications 1 à 14, **caractérisée en ce qu'**on utilise en tant qu'agent de blocage à l'étape c), un cétonoxime, de préférence le butanonoxime.

16. Composition selon une ou plusieurs des revendications 1 à 15, **caractérisée en ce qu'**on fait réagir à l'étape a) le constituant I sur un alcool trifonctionnel ou à fonctionnalité supérieure pour obtenir un produit présentant encore des groupes isocyanato libres et ensuite on fait réagir à l'étape b) le produit obtenu sur un composé de formule (B)
R"N(CH₂CH₂OH)₂ (b)
où R" représente un groupe alkyle présentant 1 à 4 atomes de carbone, pour obtenir un produit présentant encore des groupes isocyanato libres.

17. Composition selon une ou plusieurs des revendications 1 à 16, **caractérisée en ce qu'**on disperse dans l'eau le produit obtenu selon l'étape c) en utilisant un ou plusieurs agents dispersants, de préférence en utilisant l'huile de ricin oxéthylée présentant en moyenne 10 à 50, d'une manière particulièrement préférée 25 à 40 motifs oxyde d'éthylène.

18. Utilisation d'une composition selon une ou plusieurs des revendications 1 à 17 pour le traitement de matières fibreuses, de préférence de structures textiles tissées ou tricotées.

19. Utilisation d'une composition selon la revendication 18, **caractérisée en ce que** les matières fibreuses sont en cellulose native ou régénérée, en fibres d'origine animale, de préférence la laine, en fibres synthétiques organiques ou en mélanges de ces matières.

20. Utilisation selon la revendication 18 ou 19, **caractérisée en ce qu'**on utilise les compositions en combinaison avec des polymères présentant des groupes perfluoroalkyles, éventuellement en ajoutant d'autres produits.

21. Utilisation selon une ou plusieurs des revendications 18 à 20, **caractérisée en ce qu'**on applique les compositions aux matières fibreuses sous forme de dispersions aqueuses.
